(19) **Europäisches Patentamt European Patent Office Office européen des brevets**

(11) **EP 3 615 617 B1**

(12) **EUROPEAN PATENT SPECIFICATION**

(45) Date of publication and mention of the grant of the patent:
**09.08.2023 Bulletin 2023/32**

(21) Application number: **18720217.1**

(22) Date of filing: **24.04.2018**

(51) International Patent Classification (IPC):
*D21H 21/02* (2006.01)    *C09C 1/00* (2006.01)
*C09C 1/02* (2006.01)    *C09C 1/04* (2006.01)
*C09C 1/24* (2006.01)    *C09C 1/30* (2006.01)
*C09C 1/34* (2006.01)    *C09C 1/36* (2006.01)
*C09C 1/40* (2006.01)    *C09C 1/42* (2006.01)
*C09C 3/08* (2006.01)    *D21C 9/08* (2006.01)
*D21H 17/62* (2006.01)    *D21H 17/67* (2006.01)
*D21H 17/68* (2006.01)

(52) Cooperative Patent Classification (CPC):
**C09C 3/08; C09C 1/009; C09C 1/02; C09C 1/021;
C09C 1/024; C09C 1/027; C09C 1/04; C09C 1/043;
C09C 1/24; C09C 1/3063; C09C 1/346;
C09C 1/3669; C09C 1/405; C09C 1/407;
C09C 1/42;**      (Cont.)

(86) International application number:
**PCT/EP2018/060437**

(87) International publication number:
**WO 2018/197465 (01.11.2018 Gazette 2018/44)**

(54) **COATED CALCIUM CARBONATE FOR PITCH AND/OR STICKIES CONTROL**

BESCHICHTETES CALCIUMKARBONAT GEGEN STICKIES UND ZELLSTOFFHARZ

CARBONATE DE CALCIUM REVÊTU POUR LA RÉGULATION DE LA POIX ET/OU DES IMPURETÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2017 US 201762489052 P**

(43) Date of publication of application:
**04.03.2020 Bulletin 2020/10**

(73) Proprietor: **IMERTECH SAS
75015 Paris (FR)**

(72) Inventors:
• **FINDLAY, Andrew
Par
Cornwall PL24 2SQ (GB)**
• **SCALOPPE, João
201 - CEP 13091 Campinas (BR)**

• **HARDISTY, Samuel
Par
Cornwall PL24 2SQ (GB)**
• **WICKS, Douglas
Roswell, Georgia 30076 (US)**
• **PRESTON, Janet
Par
Cornwall PL24 2SQ (GB)**

(74) Representative: **Haseltine Lake Kempner LLP
One Portwall Square
Portwall Lane
Bristol BS1 6BH (GB)**

(56) References cited:
**EP-A1- 2 546 410    WO-A1-89/03863
US-A- 4 985 120**

     **(Cont. next page)**

EP 3 615 617 B1

- **DATABASE WPI Week 201546 Thomson Scientific, London, GB; AN 2015-380332 XP002782410, -& BR 1020 1400 2485 A2 (ECOFILL ESPEC EM TECNOLOGIA TRANSF RESID) 14 April 2015 (2015-04-14)**

Remarks:
    The file contains technical information submitted after the application was filed and not included in this specification

(52) Cooperative Patent Classification (CPC): (Cont.)
    **D21C 9/08; D21H 17/62; D21H 17/675; D21H 17/68; D21H 21/02**

Description

## TECHNICAL FIELD

The present invention relates generally to the use of a coated particulate mineral as a pitch and/or papermaking stickies control agent in a composition comprising cellulosic pulp. The coated particulate mineral is coated with one or more rosin acid(s) and/or one or more derivatives thereof. The present invention further relates to the coated particulate mineral and methods of making the coated particulate mineral.

## BACKGROUND

Papermaking generally involves breaking down a fibre source such as wood, fibre crops or waste paper into the constituent fibres by chemical and/or mechanical and/or thermal treatments to produce a cellulosic pulp. During this pulping stage (and further steps in the papermaking process) resinous compounds known as "pitch" that are present in the fibre source are released. The lipophilic character of the resinous compounds leads them to form colloidal droplets when suspended in water. Alternatively or additionally, synthetic (man-made) substances known as papermaking "stickies" may also form colloidal droplets when suspended in water. The pitch and stickies may collect and form deposits on the machinery. This may create a break in the paper web causing the machine to stop running. The pitch and stickies may also blemish the paper, reducing the quality of the finished product.

A number of methods may be employed to control pitch and/or stickies during papermaking such as, for example, the addition of mineral agents such as talc and/or bentonite, or biological agents such as enzymes and fungi. It is desirable to provide improved and/or alternative methods and agents for controlling pitch and/or stickies during the papermaking process.

DATABASE WPI, 0, Derwent World Patents Index, vol. 2015, no. 46, Database accession no. 2015-380332, XP002782410 & BR102014002485 A2 20150414 (ECOFILL ESPEC EM TECNOLOGIA TRANSF RESID) describes a product to be used as an anti-pitch product in the manufacture of cellulose, this product being precipitated calcium carbonate, the so-called lime sludge produced in the causticizing system in the cellulose industry, and product obtained by this process, pertaining to the chemical field, specifically generated and produced during the causticizing process.

EP 2 546 410 describes a process for the reduction of pitch in an aqueous medium generated in a papermaking or pulping process, to the use of a hydrophobised ground calcium carbonate and/or a hydrophobized precipitated calcium carbonate for reducing the amount of pitch in an aqueous medium as well as to a hydrophobized ground calcium carbonate and/or a hydrophobised precipitated calcium carbonate and a composite comprising the hydrophobised ground calcium carbonate and/or the hydrophobised precipitated calcium carbonate and pitch.

## SUMMARY

In accordance with a first aspect of the present invention there is provided a use of a particulate mineral that is coated with one or more rosin acid(s) and/or one or more derivative(s) thereof as a pitch and/or stickies control agent in a composition comprising cellulosic pulp.

In accordance with a second aspect of the present invention there is provided a method of reducing dissolved and/or colloidal pitch and/or stickies in a cellulosic pulp, the method comprising contacting the cellulosic pulp with a particulate mineral that is coated with one or more rosin acid(s) and/or one or more derivative(s) thereof. The method may, for example, be part of a method of making a pulp for papermaking. The method may, for example, be part of a method of making paper.

In accordance with a third aspect of the present invention there is provided a particulate mineral having a coating of one or more rosin acid(s) and/or one or more derivative(s) thereof. The coated particulate mineral may, for example, be as described in any aspect or embodiment of the present invention.

In accordance with a fourth aspect of the present invention there is provided a composition comprising a cellulosic pulp and a particulate mineral having a coating of one or more rosin acid(s) and/or one or more derivative(s) thereof. The coated particulate mineral may, for example, be as described in any aspect or embodiment of the present invention.

In accordance with a fifth aspect of the present invention there is provided a method of making a coated particulate mineral according to any aspect or embodiment in the present invention.

In accordance with a sixth aspect of the present invention there is provided a paper product comprising a particulate mineral having a coating of one or more rosin acid(s) and/or one or more derivative(s) thereof.

In accordance with a seventh aspect of the present invention there is provided a paper product obtainable and/or obtained from a composition or method in accordance with any aspect or embodiment of the present invention.

Certain embodiments of any aspect of the present invention may provide one or more of the following advantages:

- reduce or prevent the formation of pitch and/or stickies deposits on papermaking machinery;
- reduce or prevent quality defects on paper due to deposition of pitch and/or stickies;
- reduced amounts of dissolved and/or colloidal pitch and/or stickies in cellulosic pulp composition (e.g. measured by UV absorbance);
- decreased pitch and/or stickies deposition when measured according to the Gustafsson test;
- increase the surface tension of the cellulosic pulp composition.

## DETAILED DESCRIPTION

There is provided herein the use of a particulate mineral coated with one or more rosin acid(s) and/or one or more derivative(s) thereof as a pitch and/or stickies control agent in a composition comprising cellulosic pulp. There is further provided a method of reducing dissolved and/or colloidal pitch and/or stickies in a composition comprising cellulosic pulp, the method comprising contacting the composition comprising cellulosic pulp with a particulate mineral coated with one or more rosin acid(s) and/or one or more derivative(s) thereof. The use or method may, for example, be part of a method of making a papermaking pulp. The use or method may, for example, be part of a method of making paper (including board).

The term "pitch" refers to the resinous compounds that are released from the fibre source used to make the cellulosic pulp. The pitch includes a variety of lipophilic compounds such as, for example, alkanes, fatty alcohols, fatty acids, rosin acids, sterols, terpenoids, conjugated sterols and triglycerides. The lipophilic nature of these compounds causes them to form colloidal droplets when suspended in water. The most hydrophobic compounds (e.g. in some embodiments triglycerides) are found at the centre of the colloidal droplets and the least hydrophobic compounds are found at the outside of the colloidal droplets forming a shell around the most hydrophobic compounds (e.g. in some embodiments fatty acids and rosin acids).

The term "stickies" refers to papermaking stickies, which are synthetic (man-made) tacky substances that are present in paper pulp that has been prepared from recycled paper. Stickies may, for example, include one or more of printing inks, coating binders (e.g. synthetic latex), waxes, hot melt adhesives and pressure-sensitive adhesives, plastics, wet strength resins and papermaking additives. In certain embodiments, stickies mainly comprises pressure-sensitive adhesives which may, for example, be one or more polyacetates. Stickies also generally form colloidal droplets suspended in water.

The precise combination of compounds making up the pitch may vary, for example depending on the type of fibre source that is used. Any material comprising cellulose fibres that may be separated to form a cellulosic pulp may be used as the fibre source. The fibre source may, for example, be wood (e.g. from the stems and/or roots of trees and other woody plants (e.g. trees, shrubs, lianas)), fibre crops (e.g. jute, hemp, flax (linen), cotton, bamboo, wheat, straw) and repulped and/or deinked waste paper. The precise combination of compounds making up the stickies may vary, for example, depending on the type of paper that is recycled to make the papermaking pulp and the nature of the additives and coatings (e.g. waxes and adhesives) used on that paper.

The term paper, as used herein, should be understood to mean all forms of paper, including board, such as, for example, white-lined board and linerboard, cardboard, paperboard, coated board, and the like. Paper may be coated or uncoated and may be calendered or super calendared as appropriate.

The term cellulosic pulp refers to a material comprising cellulose fibres that have been separated from a fibre source such as wood, fibre crops and waste paper. The cellulosic pulp may also comprise hemicellulose fibres (e.g. xylan, glucuronoxylan, arabinoxylan, glucomannan, xyloglucan) and/or lignin fibres that have also been separated from a fibre source. The cellulosic pulp may, for example, be dried pulp (e.g. comprising equal to or less than about 5 wt% liquid, for example equal to or less than about 4 wt% liquid, for example equal to or less than about 3 wt% liquid, for example equal to or less than about 2 wt% liquid, for example equal to or less than about 1 wt% liquid, for example equal to or less than about 0.5 wt% liquid). The cellulosic pulp may, for example, be dried pulp comprising equal to or less than about 5 wt% water, for example equal to or less than about 4 wt% water, for example equal to or less than about 3 wt% water, for example equal to or less than about 2 wt% water, for example equal to or less than about 1 wt% water, for example equal to or less than about 0.5 wt% water. Alternatively the cellulosic pulp may be in combination with a liquid solvent such as water. The cellulosic pulp may, for example, be in an aqueous composition.

The term "pitch and/or stickies control agent" refers to any agent that is able to reduce or prevent pitch and/or stickies respectively from depositing on machinery during a pulp and/or papermaking process. A pitch and/or stickies control agent may, for example, reduce or prevent pitch and/or stickies respectively from dissolving in water and/or forming colloidal droplets when suspended in water. For example, a pitch and/or stickies control agent may reduce the number of and/or reduce the size of colloidal droplets formed from pitch and/or stickies when suspended in water.

Without wishing to be bound by theory, it is thought that pitch and/or stickies may be adsorbed onto the surface of the coated particulate minerals described herein such that the amount of pitch and/or stickies respectively dissolved in water and/or forming colloidal droplets that remain suspended in water after treatment is reduced. This reduces the deposition of pitch and/or stickies on the papermaking machinery and/or paper surface. Thus, in the methods of removing pitch and/or stickies described herein, the compounds that make up the pitch and/or stickies may not be physically separated from the cellulosic pulp or composition comprising cellulosic pulp. However, the amount of pitch and/or stickies that is dissolved or in the form of colloidal droplets in the composition comprising cellulosic pulp is reduced.

The cellulosic pulp and coated particulate mineral may be contacted at any suitable time. For example, the cellulosic pulp and coated particulate mineral may be contacted at any suitable time during a method of making pulp for papermaking and/or during a method of making paper.

The coated particulate mineral may, for example, be used in the same way as known inorganic pitch and/or stickies control agents, such as talc. The coated particulate mineral may, for example, be added to the cellulosic pulp at a stage together with other mineral filler particles. For example, the mineral filler particles may be mixed with water to form an aqueous suspension or may be mixed in a tank in which a suspension of mineral filler particles is mixed with the pulp or papermaking stock suspension.

A method for making a papermaking pulp generally includes forming small pieces of a fibre source (e.g. wood chips). The method may, for example, include forming pieces of the fibre source that are uniform in size, for example by screening. The method may comprise a step of combining the pieces of the fibre source with any substance with which it is to be pulped such as water and/or a chemical pulping agent. Pulping may, for example, take place by any suitable method including, for example, by mechanical pulping (e.g. grinding), chemical pulping, thermal pulping (e.g. thermomechanical pulping, chemithermomechanical pulping) and/or biological pulping (e.g. using enzyme and/or fungi). After pulping, the cellulosic pulp may be dried (e.g. using heat and/or pressure). The cellulosic pulp may, for example, be transported as dry pulp. The dry cellulosic pulp may, for example, be rehydrated prior to or during a papermaking process. The coated particulate mineral may, for example, be introduced during any one of these steps. For example, the coated particulate mineral may be contacted with a fibre source and/or cellulosic pulp before and/or during a process for making the pulp (e.g. during a pulping stage). For example, the fibre source and/or cellulosic pulp and coated particulate mineral may be contacted before and/or during grinding. For example, the fibre source and/or cellulosic pulp and coated particulate mineral may be contacted before and/or during any bleaching stage. For example, the coated particulate mineral may be contacted with the cellulosic pulp once the process for making the cellulosic pulp is complete. For example, the coated particulate mineral may be contacted with the cellulosic pulp whilst it is in an aqueous composition and before any optional drying step. For example, the coated particulate mineral may be contacted with the cellulosic pulp after the pulp has been diluted to a concentration that can be easily pumped (e.g. solids content ranging from about 0.5 wt% to about 10 wt%, for example from about 0.5 wt% to about 5 wt%). For example, the coated particulate mineral may be contacted with the cellulosic pulp before the pulp is made into paper.

Contacting the coated particulate mineral with the fibre source and/or cellulosic pulp may, for example, involve mixing.

A method for making paper generally includes forming a pulp (for example, as described above) and optionally adjusting certain properties of the paper (e.g. colour, mechanical, chemical, biological properties) by adding particular additives. The pulp may, for example, be diluted. The pulp is then laid down on a template or frame (often referred to as screening). The pulp may then be pressed to increase the density of the material. Excess water is removed, for example using pressure and/or heat. The coated particulate mineral may, for example, be introduced during any one of these steps. For example, the coated particulate mineral may be contacted with the fibre source and/or cellulosic pulp during and/or immediately after pulping.

The coated particulate mineral may, for example, remain in the papermaking composition such that the final paper product includes the coated particulate mineral.

The coated particulate mineral may, for example, be used in an amount ranging from about 0.25 wt% to about 5 wt% based on the total dry weight of the cellulosic pulp. For example, the coated particulate mineral may be used in an amount ranging from about 0.25 wt% to about 4 wt% or from about 0.25 wt% to about 3 wt% or from about 0.25 wt% to about 2.5 wt% or from about 0.25 wt% to about 2 wt% or from about 0.25 wt% to about 1.5 wt% or from about 0.25 wt% to about 1 wt% based on the total dry weight of the cellulosic pulp. For example, the coated particulate mineral may be used in an amount ranging from about 0.5 wt% to about 5 wt% or from about 0.5 wt% to about 4 wt% or from about 0.5 wt% to about 3 wt% or from about 0.5 wt% to about 2.5 wt% or from about 0.5 wt% to about 2 wt% or from about 0.5 wt% to about 1.5 wt% or from about 0.5 wt% to about 1 wt% based on the total dry weight of the cellulosic pulp.

The composition may, for example, comprise from about 0.5 wt% to about 100 wt% of cellulose fibres based on the total weight of the cellulosic composition. Where the composition is a dry composition (e.g. a paper product), the composition may comprise from about 60 wt% to 100 wt% cellulose fibres, for example from about 65 wt% to about 99.75 wt% or from about 65 wt% to about 99.5 wt% or from about 65 wt% to about 98 wt% or from about 70 wt% to about 95 wt% or from about 75 wt% to about 90 wt% cellulose fibres based on the total weight of the composition. Where the composition is an aqueous composition, the composition may comprise from about 0.5 wt% to about 30 wt%, for example from about 1 wt% to about 25 wt% or from about 2 wt% to about 20 wt% or from about 3 wt% to about 15 wt% or from about 4 wt% to about 10 wt% or from about 5 wt% to about 10 wt% of cellulose fibres based on the total weight of the cellulosic composition.

The total amount of pitch and/or stickies adsorbed by the coated particulate mineral may, for example, be at least about 50 wt% based on the weight of the coated particulate mineral. For example, the total amount of pitch and/or stickies adsorbed by the coated particulate mineral may be at least about 55 wt% or at least about 60 wt% or at least about 65 wt% or at least about 70 wt% or at least about 75 wt% or at least about 80 wt% or at least about 85 wt% or at least about 90 wt% or at least about 95 wt% or at least about 100 wt% based on the weight of the coated particulate mineral. For example, the total amount of pitch and/or stickies adsorbed by the coated particulate mineral may be up to about 400 wt% or up to about 350 wt% or up to about 300 wt% or up to about 250 wt% or up to about 200 wt% based on the weight of the coated particulate mineral.

The amount of pitch and/or stickies adsorbed by the coated particulate mineral may, for example, be calculated using the Gustafsson test described herein using the weight of pitch and/or stickies that is recovered and comparing to the weight of coated mineral pitch and/or stickies control agent that was used.

The Gustafsson test measures pitch and/or stickies deposited as the % of pitch and/or stickies deposited compared to the pitch and/or stickies dosed into the pulp. A Gustafsson apparatus (comprising a stainless steel shaft, copper propellers (including a bottom propeller designed to cause the mixture to flow, and a small propeller in the middle and larger propeller on top which are flat and circular and are designed to attract pitch and/or stickies), speed controls and a stainless steel bucket) is used. Approximately 1.5 L of papermaking pulp is warmed to 55°C and poured into the Gustafsson apparatus pot. $CaCl_2$ (10 cm$^3$, 2 g cm$^{-3}$) is added with tris base buffer (2mL), and stirred at 375 rpm for 30 seconds. Artificial pitch and/or stickies solution (25 cm$^3$, 0.06 g cm$^{-3}$) such as 30 g of rosin resin mix A (a rosin resin having a ring and ball softening of 80°C and an acid value of 150 mgKOH/g) from Lawter™ dissolved in 500 cm$^3$ of acetone is added, and then stirred at 375 rpm for 10 seconds. The pitch and/or stickies control agent (0.3 g) is then added (for the control sample, nothing is added at this step), and again the mixture is stirred at 375 rpm for 10 seconds, then 112.5 rpm for 30 mins. The pulp is then poured away. Water (1.5 L) is added, and the machine restarted for 1 minute at 112.5 rpm. The water is then poured away, leaving a pot free of pulp. The deposits on the propellers and the steel shaft they sit upon are then extracted with ethyl acetate (10 cm$^3$), with the solvent being allowed to drip into the stainless steel pot. Once the deposits are removed, the dissembled propellers are placed in the pot with the ethyl acetate. The extracts are poured through a 150 $\mu$m sieve (to remove any remaining pulp fibres) into a container. The propellers are cleaned again, above the pot, with ethyl acetate (2×10 cm$^3$), then the pot itself (10 cm$^3$), with each portion of extract poured into the plastic container through the sieve. The extracts in the container are then poured into a pre-weighed (dry) drying container and the plastic container are extracted with ethyl acetate (10 cm$^3$), which is also added to the drying container. The extracts are then dried until a constant weight is reached (55 °C), and then placed in an oven (100 °C) until a constant weight is reached, to give pitch (and/or stickies) deposited as follows.

$$Pitch\ Deposited\ (\%) = \frac{Mass\ of\ Pitch\ Extracts\ (g)}{Mass\ of\ Pitch\ Initially\ Dosed\ (g)} \times 100$$

This can be normalized to a control (where no pitch and/or stickies control agent is added) as follows.

$$Pitch\ Deposited\ Normalized\ to\ the\ Control\ (\%) = \frac{Pitch\ Deposited\ of\ Sample}{Pitch\ Deposited\ of\ the\ Control\ Sample} \times 100$$

The coated particulate mineral may, for example, give a normalized pitch and/or stickies deposition of equal to or less than 60 % of the control when measured according to the Gustafsson test. For example, the coated particulate mineral may give a normalized pitch and/or stickies deposition equal to or less than about 55 % or equal to or less than about 50 % or equal to or less than about 45 % of the control when measured according to the Gustafsson test. For example, the coated particulate mineral may give a normalized pitch and/or stickies deposition equal to or greater than about 10 % or equal to or greater than about 15 % or equal to or greater than about 20 % or equal to or greater than about 25 % or equal to or greater than about 30 % of the control when measured according to the Gustafsson test.

Any suitable particulate mineral may be used in the present invention. The particulate mineral may, for example, be selected from one or more of the following: alkaline earth metal carbonate (for example dolomite, i.e. $CaMg(CO_3)_2$), metal sulphate (for example gypsum), metal silicate, metal oxide (for example titania, iron oxide, chromia, antimony trioxide or silica), metal hydroxide (e.g. alumina trihydrate), wollastonite, bauxite, talc (for example, French chalk), mica, zinc oxide (for example, zinc white or Chinese white), titanium dioxide (for example, anatase or rutile), zinc sulphide, calcium carbonate (for example precipitated calcium carbonate (PCC), ground calcium carbonate (GCC), for example obtained from limestone, marble and/or chalk, or surface-modified calcium carbonate), barium sulphate (for example, barite, blanc fixe or process white), alumina hydrate (for example, alumina trihydrate, light alumina hydrate, lake white or transparent white), clay (for example kaolin, calcined kaolin, China clay or bentonite), silica- or silicate-based minerals (e.g. diatomaceous earth) and zeolites. The particulate mineral may, for example, be any one of the materials listed. The particulate mineral may, for example, comprise a blend of any combination of the listed materials.

The particulate mineral may, for example, be alkaline earth metal carbonate (e.g. calcium carbonate), clay (e.g. kaolin) or a combination thereof. The particulate mineral may, for example, be an alkaline earth metal carbonate such as calcium carbonate. The particulate mineral may, for example, be precipitated calcium carbonate (PCC) or ground calcium carbonate (GCC). Hereinafter, the present invention may tend to be discussed in terms of calcium carbonate. However, the invention should not be construed as being limited as such.

The particulate calcium carbonate used in the present invention may be obtained from a natural source by grinding or may be prepared synthetically by precipitation (PCC), or may be a combination of the two, i.e. a mixture of the naturally derived ground material and the synthetic precipitated material. The PCC may also be ground.

Ground calcium carbonate (GCC), i.e. ground natural calcium carbonate is typically obtained by grinding a mineral source such as chalk, marble or limestone, which may be followed by a particle size classification step, in order to obtain a product having the desired degree of fineness. The particulate solid material may be ground autogenously, i.e. by attrition between the particles of the solid material themselves, or alternatively, in the presence of a particulate grinding medium comprising particles of a different material from the calcium carbonate to be ground.

Wet grinding of calcium carbonate involves the formation of an aqueous suspension of the calcium carbonate which may then be ground, optionally in the presence of a suitable dispersing agent. Reference may be made to, for example, EP-A-614948 (the contents of which are incorporated by reference in their entirety) for more information regarding the wet grinding of calcium carbonate.

When the particulate mineral is obtained from naturally occurring sources, it may be that some mineral impurities will inevitably contaminate the ground material. For example, naturally occurring calcium carbonate occurs in association with other minerals. Also, in some circumstances, minor additions of other minerals may be included, for example, one or more of kaolin, calcined kaolin, wollastonite, bauxite, talc or mica, could also be present. In general, however, the particulate mineral used in the invention will contain less than 5% by weight, for example less than 2 wt%, for example less than 1% by weight of other mineral impurities.

PCC may be used as the source of particulate calcium carbonate in the present invention, and may be produced by any of the known methods available in the art. TAPPI Monograph Series No 30, "Paper Coating Pigments", pages 34-35 describes the three main commercial processes for preparing precipitated calcium carbonate which is suitable for use in preparing products for use in the paper industry, but may also be used in the practice of the present invention. In all three processes, limestone is first calcined to produce quicklime, and the quicklime is then slaked in water to yield calcium hydroxide or milk of lime. In the first process, the milk of lime is directly carbonated with carbon dioxide gas. This process has the advantage that no byproduct is formed, and it is relatively easy to control the properties and purity of the calcium carbonate product. In the second process, the milk of lime is contacted with soda ash to produce, by double decomposition, a precipitate of calcium carbonate and a solution of sodium hydroxide. The sodium hydroxide must be substantially completely separated from the calcium carbonate if this process is to be commercially attractive. In the third main commercial process, the milk of lime is first contacted with ammonium chloride to give a calcium chloride solution and ammonia gas. The calcium chloride solution is then contacted with soda ash to produce, by double decomposition, precipitated calcium carbonate and a solution of sodium chloride.

The process for making PCC results in very pure calcium carbonate crystals and water. The crystals can be produced in a variety of different shapes and sizes, depending on the specific reaction process that is used. The three main forms of PCC crystals are aragonite, rhombohedral and scalenohedral, all of which are suitable for use in the present invention, including mixtures thereof.

The particulate mineral may, for example, have a $d_{50}$ ranging from about 0.3 $\mu$m to about 5 $\mu$m. For example, the particulate mineral may have a $d_{50}$ ranging from about 0.4 $\mu$m to about 5 $\mu$m or from about 0.5 $\mu$m to about 5 $\mu$m or from about 1 $\mu$m to about 4.5 $\mu$m or from about 1 $\mu$m to about 4 $\mu$m or from about 1 $\mu$m to about 2 $\mu$m or from about 1.5 $\mu$m to about 4 $\mu$m or from about 2 $\mu$m to about 3.5 $\mu$m or from about 2.5 $\mu$m to about 3 $\mu$m. For example, the particulate mineral may have a $d_{50}$ ranging from about 1 $\mu$m to about 2 $\mu$m, for example from about 1 $\mu$m to about 1.75 $\mu$m, for example from about 1 $\mu$m to about 1.5 $\mu$m.

The particulate mineral may, for example, have a $d_{90}$ ranging from about 1 $\mu$m to about 10 $\mu$m. For example, the particulate mineral may have a $d_{90}$ ranging from about 1 $\mu$m to about 9 $\mu$m or from about 1 $\mu$m to about 8 $\mu$m or from about 1 $\mu$m to about 7 $\mu$m or from about 1 $\mu$m to about 6 $\mu$m. For example, the particulate mineral may have a $d_{90}$ ranging from about 2 $\mu$m to about 10 $\mu$m or from about 2 $\mu$m to about 9 $\mu$m or from about 2 $\mu$m to about 8 $\mu$m or from about 2 $\mu$m to about 7 $\mu$m or from about 2 $\mu$m to about 6 $\mu$m.

The particulate mineral may, for example, have a $d_{98}$ ranging from about 3 $\mu$m to about 15 $\mu$m. For example, the particulate mineral may have a $d_{98}$ ranging from about 3 $\mu$m to about 14 $\mu$m or from about 3 $\mu$m to about 13 $\mu$m or

from about 3 μm to about 12 μm or from about 3 μm to about 11 μm or from about 3 μm to about 10 μm or from about 3 μm to about 9 μm. For example, the particulate mineral may have a $d_{98}$ ranging from about 4 μm to about 12 μm or from about 4 μm to about 11 μm or from about 4 μm to about 10 μm or from about 4 μm to about 9 μm.

The particulate mineral may, for example, have a $d_{10}$ ranging from about 0.01 μm to about 2 μm. For example, the particulate mineral may have a $d_{10}$ ranging from about 0.01 μm to about 1.5 μm or from about 0.01 μm to about 1 μm or from about 0.01 μm to about 0.5 μm or from about 0.1 μm to about 2 μm or from about 0.1 μm to about 1.5 μm or from about 0.1 μm to about 1 μm or from about 0.1 μm to about 0.5 μm.

The particulate mineral may, for example, have a steepness factor ranging from about 20 to about 70. For example, the particulate mineral may have a steepness factor ranging from about 20 to about 65 or from about 20 to about 60 or from about 25 to about 55 or from about 30 to about 50 or from about 35 to about 45 or from about 30 to about 40.

In certain embodiments, the particulate mineral (e.g. calcium carbonate such as GCC) has a $d_{50}$ ranging from about 0.5 μm to about 2 μm, a $d_{98}$ ranging from about 4 μm to about 10 μm and a $d_{10}$ ranging from about 0.1 μm to about 0.6 μm. The particulate mineral may, for example, also have a $d_{90}$ ranging from about 2 μm to about 6 μm. The particulate mineral may, for example, also have a steepness factor ranging from about 20 to about 50.

In certain embodiments, the particulate mineral (e.g. calcium carbonate such as GCC) has a $d_{50}$ ranging from about 0.5 μm to about 1.5 μm, a $d_{98}$ ranging from about 4 μm to about 5 μm and a $d_{10}$ ranging from about 0.1 μm to about 0.4 μm. The particulate mineral may, for example, also have a $d_{90}$ ranging from about 2 μm to about 3 μm. The particulate mineral may, for example, also have a steepness factor ranging from about 40 to about 50.

In certain embodiments, the particulate mineral (e.g. calcium carbonate such as PCC) has a $d_{50}$ ranging from about 1 μm to about 2 μm, a $d_{98}$ ranging from about 7.5 μm to about 9 μm and a $d_{10}$ ranging from about 0.3 μm to about 0.4 μm. The particulate mineral may, for example, also have a $d_{90}$ ranging from about 4.5 μm to about 5.5 μm. The particulate mineral may, for example, also have a steepness factor ranging from about 20 to about 30.

In certain embodiments, the particulate mineral (e.g. calcium carbonate such as GCC) has a $d_{50}$ ranging from about 1 μm to about 2 μm, a $d_{98}$ ranging from about 5 μm to about 7 μm and a $d_{10}$ ranging from about 0.4 μm to about 0.6 μm. The particulate mineral may, for example, also have a $d_{90}$ ranging from about 2.5 μm to about 4 μm. The particulate mineral may, for example, also have a steepness factor ranging from about 45 to about 55.

Unless otherwise stated, particle size properties referred to herein for the particulate fillers or materials are as measured in a well known manner by sedimentation of the particulate filler or material in a fully dispersed condition in an aqueous medium using a Sedigraph 5100 machine as supplied by Micromeritics Instruments Corporation, Norcross, Georgia, USA (telephone: +17706623620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that $d_{50}$ value. The $d_{98}$, $d_{90}$ and the $d_{10}$ are the values determined in this way of the particle e.s.d. at which there are 98%, 90% and 10% respectively by weight of the particles which have an equivalent spherical diameter less than that $d_{98}$, $d_{90}$ or $d_{10}$ value. Steepness factor is defined as ($d_{30}/d_{70} \times 100$). The particle size properties referred to herein relate to the particle size properties of the particulate mineral without any coating.

The particulate mineral may, for example, have a surface area ranging from about 1 m²/g to about 50 m²/g. For example, the particulate mineral may have a surface area ranging from about 2 m²/g to about 45 m²/g or from about 3 m²/g to about 40 m²/g or from about 4 m²/g to about 35 m²/g or from about 5 m²/g to about 30 m²/g. For example, the particulate mineral may have a surface area ranging from about 1 m²/g to about 15 m²/g or from about 1.5 m²/g to about 14.5 m²/g or from about 2 m²/g to about 14 m²/g or from about 3 m²/g to about 13 m²/g or from about 4 m²/g to about 12 m²/g or from about 5 m²/g to about 11 m²/g or from about 6 m²/g to about 10 m²/g or from about 7 m²/g to about 9 m²/g.

The surface area of the particulate mineral may be determined according to the BET method by the quantity of nitrogen adsorbed on the surface of said particles so to as to form a monomolecular layer completely covering said surface (measurement according to the BET method, AFNOR standard X11-621 and 622 or ISO 9277). In certain embodiments, specific surface is determined in accordance with ISO 9277, or any method equivalent thereto. The surface area properties referred to herein relate to the surface are of the particulate mineral without any coating.

The particulate mineral is coated with one or more safet acid(s) and/or one or more derivative(s) thereof. The term rosin acid refers to a mixture of more than one carboxylic acids that may be obtained from plant (e.g. tree) resins. The carboxylic acids may, for example, comprise three fused rings with the empirical formula $C_{19}H_{29}COOH$.

The precise components of each rosin acid may, for example, vary depending on the source from which it is obtained. Each rosin acid may, for example, comprise one or more abietic-type acid(s) and/or one or more primaric-type acid(s).

Each abietic-type acid may, for example, be independently selected from abietic-type acid is selected from abietic acid, neoabietic acid, dehydroabietic acid, palustric acid and levopimaric acid. Each pimaric-type acid may, for example, be independently selected from pimaric acid and isopimaric acid.

The rosin acid may, for example, be or be refined from crude tall oil (also known as liquid rosin or tallol). Tall oil is a viscous yellow-black odorous liquid obtained from the Kraft process of wood pulp manufacture when pulping mainly coniferous trees. The rosin acid may, for example, be derived from tall oil having an acid number ranging from about 160 to about 165 (e.g. derived from pine trees). The rosin acid may, for example, be derived from tall oil having an acid number ranging from about 125 to about 135 (e.g. derived from a mixture of softwoods and hardwoods). The acid number is the mass of potassium hydroxide in milligrams that is required to neutralize one gram of the chemical substance.

Each rosin acid derivative may, for example, be independently selected from rosin ester, rosin amine, rosin amide, rosin acyl chloride, rosin anhydride, rosin carboxylate, rosin thioester and rosin acyl phosphate. Derivatives of rosin acid may, for example, refer to any compounds formed in a reaction between the carboxylic acid group(s) of the rosin acid (e.g. nucleophilic acyl substitution reaction). For example, the rosin acid derivative may be a rosin ester. Thus, in certain embodiments, the particulate mineral is coated with one or more rosin acid(s) or ester(s) thereof.

The level of coating on the particulate mineral may, for example, be from about 0.1 to about 5 wt% based on the total weight of the coated particulate mineral. For example, the level of coating on the particulate mineral may be from about 0.1 wt% and about 4 wt% or from about 0.1 wt% to about 3 wt% or from about 0.1 wt% to about 2 wt% or from about 0.2 wt% to about 5 wt% or from about 0.2 wt% to about 4 wt% or from about 0.2 wt% to about 3 wt% or from about 0.2 wt% to about 2 wt% or from about 0.5 wt% to about 5 wt% or from about 0.5 wt% to about 4 wt% or from about 0.5 wt% to about 3 wt% or from about 0.5 wt% to about 2 wt%, based on the total weight of the coated particulate mineral.

The term "coating" used herein is to be understood broadly, and is not limited, for example, to uniform coatings or to coatings which cover the entire surface area of a particle. Particles in which discrete regions of the surface are modified with a coating will be understood as being coated within the terms of certain embodiments of the present invention.

There is also provided herein a method of making a coated particulate mineral as described herein, for example according to any aspect or embodiment described herein.

The particulate mineral may be coated according to any method known to a person skilled in the art. In certain embodiments, the particulate mineral and coating material (one or more rosin acid(s) or derivative(s) thereof) are mixed together, for example with heating, such that the one or more rosin acid(s) or derivative(s) thereof form a coating on the particulate mineral. In certain embodiments, a dry particulate mineral (comprising less than about 5 wt% water) and coating material are mixed together, for example with heating such that the one or more rosin acid(s) or derivative(s) thereof form a coating on the particulate mineral. In certain embodiments, the pH of the composition comprising the particulate mineral and coating material ranges from about 7 to about 9, for example from about 7.5 to about 8.5. In certain embodiments, the temperature of the mixing ranges from about 90°C to about 130°C, for example from about 95°C to about 125°C or from about 100°C to about 120°C or from about 105°C to about 115°C, for example about 110°C. In certain embodiments, mixing is at a rpm ranging from about 1000 rpm to about 25,000 rpm, for example from about 2000 rpm to about 20,000 rpm. In certain embodiments, mixing is at a rpm of about 2000 rpm to about 4000 rpm for a period of time ranging from about 5 minutes to about 15 minutes. In certain embodiments, mixing is at a rpm of about 15,000 rpm to about 25,000 rpm for a period of time ranging from about 1 minute to about 5 minutes.

The coated particulate mineral may, for example, be dewatered to increase the solids content before it is contacted with the fibre source and/or cellulosic pulp. For example, the coated particulate mineral may be dewatered to a solids content ranging from about 50 wt% to about 80 wt%, for example from about 50 wt% to about 70 wt%, for example from about 50 wt% to about 60 wt%.

The dewatered coated particulate mineral may, for example, be extruded, for example using a gravity fed basket extruder, i.e., a screw extruder, e.g., a co-rotating twin screw extruder.

The coated particulate mineral may, for example, be dewatered and/or dried before it is contacted with the fibre source and/or cellulosic pulp, for example such that it contains equal to or less than about 5 wt% water, for example equal to or less than about 4 wt% water, for example equal to or less than about 3 wt% water, for example equal to or less than about 2 wt% water, for example equal to or less than about 1 wt% water.

Dewatering may be achieved in one of a number of ways well known to those skilled in the art, e.g., filtration or centrifugation, for example using a rotary vacuum filter. The dewatered or dried coated particulate mineral may, for example, be rehydrated before it is contacted with the fibre source and/or cellulosic pulp. Alternatively, the dewatered or dried coated particulate mineral may be contacted with the fibre source and/or cellulosic pulp.

Drying may, for example, be performed at a temperature ranging from about 30°C to about 150°C, for example using a current of gas (e.g. air or an inert gas such as nitrogen). For example, drying may take place in an apron drier.

A composition comprising a coated particulate mineral may, for example, include one or more additives normally employed in the preparation of such compositions. For example, the composition may comprise a dispersing agent such as sodium polyacrylate. The one or more additives may, for example, each be included in an amount up to about 2 wt% based on the dry weight of the coated particulate mineral.

There is further provided herein a particulate mineral coated with one or more rosin acid(s) and/or one or more rosin acid derivative(s). The particulate mineral and rosin acid(s) and/or derivative(s) thereof may, for example, be as described herein, for example according to any aspect or embodiment described herein.

There is further provided herein a composition comprising cellulosic pulp and a particulate mineral coated with one or more rosin acid(s) and/or one or more rosin acid derivative(s). The particulate mineral and rosin acid(s) and/or derivative(s) thereof may, for example, be as described herein, for example according to any aspect or embodiment described herein. The composition may, for example, be an aqueous suspension. The composition may, for example, be dry.

The composition comprising cellulosic pulp and the coated particulate mineral may, for example, comprise one or more additives, for example to enhance the properties of the fibres and/or to introduce particulate properties to the paper and/or to improve the papermaking process. For example, the composition may further comprise one or more dry strength additives, one or more wet strength additives, one or more internal sizing agents, one or more retention aids, one or more dispersing agents, one or more defoamers, one or more precipitating agents, one or more slimcides, one or more complexing agents, one or more surfactants, one or more fillers (e.g. mineral fillers other than the coated particulate mineral described herein), one or more dyes, one or more optical brighteners, one or more opacifiers, one or more pH control agents, one or more corrosion inhibitors, one or more flame proofing agents and/or one or more antitarnish agents.

Use of the coated particulate mineral in a composition comprising cellulosic pulp may, for example, alter the surface tension of the composition such that it is closer to water. The coated particulate mineral may, for example, increase the surface tension of the composition in comparison to the composition prior to incorporation of the coated particulate mineral.

The composition comprising cellulosic pulp and coated particulate mineral may, for example, have a surface tension equal to or greater than about 60 mN m$^{-1}$. For example, the composition comprising cellulosic pulp may have a surface tension equal to or greater than about 61 mN m$^{-1}$ or equal to or greater than about 62 mN m$^{-1}$ or equal to or greater than about 63 mN m$^{-1}$ or equal to or greater than about 64 mN m$^{-1}$ or equal to or greater than about 65 mN m$^{-1}$. For example, the composition comprising cellulosic pulp and coated particulate mineral may have a surface tension equal to or less than about 80 mN m$^{-1}$, for example equal to or less than about 78 mN m$^{-1}$, for example equal to or less than about 76 mN m$^{-1}$, for example equal to or less than about 75 mN m$^{-1}$, for example equal to or less than about 74 mN m$^{-1}$, for example equal to or less than about 72 mN m$^{-1}$.

Surface tension is measured using a dynamic absorption tester (Dat 1100) from Fibro System AB in conjunction with Dat3 software.

There is further provided herein a paper obtained and/or obtainable from a cellulosic pulp composition described herein. Thus, there is provided herein a paper product comprising a particulate mineral having a coating of one or more rosin acid(s) and/or one or more derivative(s) thereof. The term paper, as used herein, should be understood to mean all forms of paper, including board, such as, for example, white-lined board and linerboard, cardboard, paperboard, coated board, and the like. Paper may be coated or uncoated and may be calendered or super calendared as appropriate. The paper may, for example, be made by the process described herein.

## EXAMPLES

Gustafsson test

The Gustafsson test described above was used to test the pitch control capabilities of the minerals described in Table 1.

The artificial pitch used was rosin resin mix A (a rosin resin having a ring and ball softening of 80°C and an acid value of 150 mg KOH/g), rosin resin mix B (a rosin resin having a ring and ball softening of 65°C and an acid value of 150 mg KOH/g) or rosin resin mix C (rosin resin having a viscosity of 1000 mPa.s at 70°C and an acid value of 150 mg KOH/g) (provided by Lawter™) (30 g) dissolved in acetone (500 cm$^3$), giving an artificial pitch solution (0.06 g cm$^{-3}$). This was protected from sunlight during storage.

The pulp was Botnia pulp (440 g) soaked overnight in filtered water (10 L). This was added to a Weverk type valley beater, along with filtered water (12 L). The beater was run for 15 minutes, then a weight was added (5.568 Kg) to engage the bed plate and the beater run for 55 minutes, giving a Canadian Standard Freeness (CSF)[i] of 210-350. The pulp was always used within 7 days.

The coated particulate minerals were coated in a JK mill. The particulate mineral was dried (110°C) and weighed into a suitable portion (e.g. 99 g for 100 g of 1% coated particulate mineral) and placed back in the oven to maintain its temperature (110°C).

The coating was also weighed into a container (e.g. 1 g for 100 g of 1 % coated particulate mineral). The heated particulate mineral was then placed in the JK mill with the coating on top and the mill was run for 2 minutes with shaking every 10 seconds.

The tris base buffer 2-Amino-2-(hydroxymethyl)-1,3-propanediol (tris) (20 cm$^3$, 40 % w/w) had HCl (10 % w/w) added until the solution was pH 8. This then had 10 mL of water added, giving the final buffer, which was stored in the fridge

The results of the Gustafsson test are shown as pitch deposited, which is the amount of pitch that deposited on the surface of the Gustafsson machine as a percentage of the amount of pitch dosed.

$$Pitch\ Deposited\ (\%) = \frac{Mass\ of\ Pitch\ Extracts\ (g)}{Mass\ of\ Pitch\ Initially\ Dosed\ (g)} \times 100$$

This then gives normalized pitch deposited when divided by the control.

$$Pitch\ Deposited\ Normalized\ to\ the\ Control\ (\%) = \frac{Pitch\ Deposited\ of\ Sample}{Pitch\ Deposited\ of\ the\ Control\ Sample} \times 10$$

**Table 1.**

| Mineral | $d_{10}$ (sedigraph) ($\mu m$) | $d_{50}$ (sedigraph) ($\mu m$) | $d_{98}$ (sedigraph) ($\mu m$) | Steepness Factor (sedigraph) |
|---|---|---|---|---|
| Uncoated GCC A | 0.27 | 1.1 | 4.7 | 45 |
| Uncoated GCC B | 0.50 | 1.6 | 5.9 | 49 |
| Talc A | 0.75 | 3.4 | 16.0 | 35 |
| Cationic Talc A | 0.99 | 3.4 | 14.0 | 46 |
| Uncoated GCC C | 0.28 | 1.4 | 7.0 | 34 |
| PCC A | 0.36 | 1.5 | 8.4 | 26 |
| Uncoated Kaolin A | 0.30 | 1.6 | 9.8 | 24 |

The results are shown in Tables 2 and 3.

**Table 2.**

| Pitch Control Agent | Pitch Deposited Normalized to the Control |
|---|---|
| Control (no pitch control agent) | 100 |
| Cationic Talc A | 43 |
| Uncoated GCC C | 84 |
| GCC A coated with 1 wt% rosin resin mix B | 44 |

**Table 3.**

| Pitch Control Agent | Pitch Deposited Normalized to the Control (%) |
|---|---|
| Control (no pitch control agent) | 100 |
| Cationic Talc A | 55 |
| Uncoated GCC C | 77 |
| Uncoated Kaolin A | 78 |
| GCC A coated with 1 wt% rosin resin mix B | 45 |
| Kaolin A coated with 1 wt% rosin resin mix B | 55 |
| GCC B coated with 1 wt% rosin resin mix B | 43 |
| PCC A coated with 1 wt% rosin resin mix B | 61 |

It was surprisingly found that GCC A coated with 1 wt% rosin resin mix B reduced pitch deposition to about the same level as the cationic talc A. The uncoated GCC C and uncoated kaolin A only had a small reduction of pitch deposition compared to the control.

The Gustafsson test method described above was conducted without the initial mixing at 375 rpm. The artificial pitch, rosin resin mix, and the particulate were added at the same time before stirring was commenced at 112.5 rpm. This experiment studied the effect of different rosin acid coatings. The results are shown in table 4.

**Table 4.**

| Pitch Control Agent | Pitch Deposited Normalized to the Control (%) |
|---|---|
| Uncoated GCC A | 74 |
| Talc A | 32 |
| Cationic Talc A | 19 |
| GCC A coated with 1 wt% rosin resin mix B | 20 |
| GCC A coated with 1 wt% rosin resin mix C | 30 |
| GCC A coated with 1 wt% rosin resin mix A | 38 |
| GCC A coated with 1 wt% stearic acid | 31 |

Surface Tension and UV Absorbance Tests

The pulp that was removed when performing the Gustafsson test was retained and surface tension and UV absorbance tests were performed on it.

Surface tension was measured on a dynamic absorption tester (Dat 1100) from Fibro System AB in conjunction with Dat 3 software. The closer the surface tension to water, the less dissolved substances present (more pitch removed). A test was also run with no pitch and particulate added, to demonstrate that it did not have an effect on the surface tension post centrifugation.

UV absorbance of pulp samples was measured between 200 nm and 600 nm using quartz cuvettes. The samples were made to 16.6 % solutions (0.5 mL of sample with 2.5 mL of filtered water). A background sample of filtered water (same as used to make the pulp) was also run. The spectrometer was a Unicam UV4-100 UV/VIS spectrophotometer (scan speed: intelliscan, lamp change at 325 nm, smoothing: med).

The maximum value of each graph, present at 262 nm on a peak, was then divided by that of the control samples:

$$Concentration\ of\ dissolved\ pitch\ as\ \%\ of\ control\ (\%) = \frac{Maximum\ absorbance\ at\ 262\ nm\ of\ sample}{Maximum\ absorbance\ at\ 262\ nm\ of\ Control} \times 100$$

This was then subtracted from 100 to give percentage of pitch concentration reduction.

$$Reduction\ of\ pitch\ concentration\ (\%) = 100 - concentration\ of\ dissolved\ pitch\ as\ percentage\ of\ control\ (\%)$$

The surface tension results are shown in Table 5. The UV absorbance results are shown in Table 6.

**Table 5.**

| Pulp sample | Surface tension (mN m$^{-1}$) |
|---|---|
| Filtered Water | 72 |
| Uncoated GCC A (with no pitch) | 72 |
| Samples from Gustafsson Test shown in Table 2. | |
| Control (no pitch control agent) | 60 |
| Catonised Talc A | 63 |

(continued)

| Samples from Gustafsson Test shown in Table 2. | |
|---|---|
| GCC A with 1 wt% rosin resin mix B | 62 |
| Uncoated GCC C | 59 |
| **Samples from Gustafsson Test shown in Table 3.** | |
| Control (no pitch control agent) | 64 |
| Catonised Talc A | 65 |
| GCC A with 1 wt% rosin resin mix B | 66 |
| Uncoated GCC C | 64 |
| Kaolin A coated with 1 wt% rosin resin mix B | 67 |
| GCC B coated with 1 wt% rosin resin mix B | 66 |
| PCC A coated with 1 wt% rosin resin mix B | 63 |

**Table 6**.

| Pulp sample | Maximum absorbance (wavelength = 262 nm) | Reduction of pitch concentration compared to control (%) |
|---|---|---|
| Samples from Gustafsson Test shown in table 2. | | |
| Control (no pitch control agent) | 0.974 | 0 |
| Uncoated GCC C | 0.844 | 13 |
| Catonised Talc A | 0.728 | 25 |
| GCC A with 1 wt% rosin resin mix B | 0.775 | 20.4 |
| **Samples from Gustafsson Test shown in table 2.** | | |
| Control (no pitch control agent) | 0.805 | 0 |
| Uncoated GCC C | 0.704 | 13 |
| Catonised Talc A | 0.722 | 10 |
| GCC A with 1 wt% rosin resin mix B | 0.640 | 20 |
| Kaolin A coated with 1 wt% rosin resin mix B | 0.615 | 24 |
| GCC B coated with 1 wt% rosin resin mix B | 0.65 | 19 |
| PCC A coated with 1 wt% rosin resin mix B | 0.66 | 32 |

**Claims**

1. Use of a particulate mineral coated with one or more rosin acid(s) and/or derivative(s) thereof as a pitch and/or stickies control agent in a composition comprising cellulosic pulp, wherein each rosin acid comprises one or more abietic-type acid and/or one or more pimaric-type acid, and wherein each rosin acid derivative is selected from the group consisting of rosin ester, rosin amine, rosin amide, rosin acyl chloride, rosin anhydride, rosin carboxylate, rosin thioester and rosin acyl phosphate.

2. A method of reducing dissolved and/or colloidal pitch and/or stickies in cellulosic pulp, the method comprising contacting the cellulosic pulp with a particulate mineral having a coating of one or more rosin acid(s) and/or derivative(s) thereof, wherein each rosin acid comprises one or more abietic-type acid and/or one or more pimaric-type acid, and wherein each rosin acid derivative is selected from the group consisting of rosin ester, rosin amine, rosin amide, rosin acyl chloride, rosin anhydride, rosin carboxylate, rosin thioester and rosin acyl phosphate.

3. The use or method according to claims 1 or 2, wherein the particulate mineral is an alkaline earth metal carbonate such as calcium carbonate, for example precipitated calcium carbonate (PCC) or ground calcium carbonate (GCC).

4. The use or method according to any preceding claim, wherein each abietic-type acid is selected from abietic acid, neoabietic acid, dehydroabietic acid, palustric acid and levopimaric acid and each pimaric-type acid is selected from pimaric acid and isopimaric acid.

5. The use or method according to any preceding claim, wherein the particulate mineral is coated with 0.1 wt% to 5 wt% of the rosin acid(s) and/or derivative(s) thereof based on the weight of the particulate mineral, for example wherein the particulate mineral is coated with 0.5 wt% to 2 wt% of the rosin acid(s) and/or derivative(s) thereof.

6. The use or method according to any preceding claim, wherein the particulate mineral has a $d_{50}$ ranging from 0.5 $\mu$m to 5 $\mu$m and/or wherein the particulate mineral has a BET surface area ranging from 1 to 15 $m^2$/g

7. The use or method according to any preceding claim, wherein the coated particulate mineral is used in an amount of 0.25 wt% to 2.50 wt% based on the total weight of dry cellulosic pulp.

8. The method of any one of claims 2 to 7, wherein the method is part of a method of making papermaking pulp or a method of making paper.

9. A particulate mineral coated with one or more rosin acid(s) and/or derivative(s) thereof, wherein each rosin acid comprises one or more abietic-type acid and/or one or more pimaric-type acid, and wherein each rosin acid derivative is selected from the group consisting of rosin ester, rosin amine, rosin amide, rosin acyl chloride, rosin anhydride, rosin carboxylate, rosin thioester and rosin acyl phosphate.

10. The coated particulate mineral of claim 9, wherein the particulate mineral is an alkaline earth metal carbonate such as calcium carbonate, for example precipitated calcium carbonate (PCC) or ground calcium carbonate (GCC).

11. The coated particulate mineral of claim 9 or 10, wherein each abietic-type acid is selected from abietic acid, neoabietic acid, dehydroabietic acid, palustric acid and levopimaric acid and each pimaric-type acid is selected from pimaric acid and isopimaric acid.

12. The coated particulate mineral of any one of claims 9 to 11, wherein the particulate mineral is coated with 0.1 wt% to 5 wt% of the rosin acid(s) and/or derivative(s) thereof based on the weight of the particulate mineral, for example wherein the particulate mineral is coated with 0.5 wt% to 2 wt% of the rosin acid(s) and/or derivative(s) thereof.

13. The coated particulate mineral of any one of claims 9 to 12, wherein the particulate mineral has a $d_{50}$ ranging from 0.5 $\mu$m to 5 $\mu$m and/or wherein the particulate mineral has a BET surface area ranging from 1 to 15 $m^2$/g.

14. A composition comprising a cellulosic pulp and a coated particulate mineral of any one of claims 9 to 13, for example wherein the amount of coated particulate mineral in the composition is 0.25 wt% to 2.50 wt% based on the weight of the dry cellulosic pulp.

15. A method of making a coated particulate mineral of any one of claims 9 to 13, the method comprising coating a particulate mineral with one or more rosin acid(s) and/or derivative(s) thereof.

**Patentansprüche**

1. Verwendung eines teilchenförmigen Minerals, das mit einer oder mehreren Kolophoniumsäure(n) und/oder einem oder mehreren Derivat(en) davon beschichtet ist, als Mittel gegen Harzablagerung und/oder klebende Verunreinigungen in einer Zusammensetzung, die Zellulosebrei umfasst, wobei jede Kolophoniumsäure eine oder mehrere Säuren vom Abietin-Typ und/oder eine oder mehrere Säuren vom Pimar-Typ umfasst, und wobei jedes Kolophoniumsäurederivat aus der Gruppe bestehend aus Kolophoniumester, Kolophoniumamin, Kolophoniumamid, Kolophoniumsäurechlorid, Kolophoniumanhydrid, Kolophoniumcarboxylat, Kolophoniumthioester und Kolophoniumacylphosphat ausgewählt ist.

2. Verfahren zum Reduzieren von gelöster und/oder kolloidaler Harzablagerung und/oder gelösten und/oder kolloidalen klebenden Verunreinigungen in Zellulosebrei, wobei das Verfahren Inkontaktbringen des Zellulosebreis mit einem teilchenförmigen Mineral umfasst, das eine Beschichtung mit einer oder mehreren Kolophoniumsäure(n) und/oder einem oder mehreren Derivat(en) davon aufweist, wobei jede Kolophoniumsäure eine oder mehrere Säuren vom Abietin-Typ und/oder eine oder mehrere Säuren vom Pimar-Typ umfasst, und wobei jedes Kolophoniumsäurederivat aus der Gruppe bestehend aus Kolophoniumester, Kolophoniumamin, Kolophoniumamid, Kolophoniumsäurechlorid, Kolophoniumanhydrid, Kolophoniumcarboxylat, Kolophoniumthioester und Kolophoniumacylphosphat ausgewählt ist.

3. Verwendung oder Verfahren nach Anspruch 1 oder 2, wobei das teilchenförmige Mineral ein Erdalkalikarbonat wie etwa Calciumkarbonat, beispielsweise gefälltes Calciumkarbonat (PCC) oder gemahlenes Calciumkarbonat (GCC) ist.

4. Verwendung oder Verfahren nach einem der vorhergehenden Ansprüche, wobei jede Säure vom Abietin-Typ aus Abietinsäure, Neoabietinsäure, Dehydroabietinsäure, Palustrinsäure und Levopimarsäure ausgewählt ist und jede Säure vom Pimar-Typ aus Pimarsäure und Isopimarsäure ausgewählt ist.

5. Verwendung oder Verfahren nach einem der vorhergehenden Ansprüche, wobei das teilchenförmige Mineral mit 0,1 Gew.-% bis 5 Gew.-% der Kolophoniumsäure(n) und/oder des Derivats/der Derivate davon, bezogen auf das Gewicht des teilchenförmigen Minerals, beschichtet ist, wobei beispielsweise das teilchenförmige Mineral mit 0,5 Gew.-% bis 2 Gew.-% der Kolophoniumsäure(n) und/oder des Derivats/der Derivate davon beschichtet ist.

6. Verwendung oder Verfahren nach einem der vorhergehenden Ansprüche, wobei das teilchenförmige Mineral einen $d_{50}$-Wert im Bereich von 0,5 $\mu$m bis 5 $\mu$m aufweist und/oder wobei das teilchenförmige Mineral eine BET-Oberfläche im Bereich von 1 bis 15 $m^2$/g aufweist.

7. Verwendung oder Verfahren nach einem der vorhergehenden Ansprüche, wobei das beschichtete teilchenförmige Mineral in einer Menge von 0,25 Gew.-% bis 2,50 Gew.-%, bezogen auf das Gesamtgewicht des trockenen Zellulosebreis, verwendet wird.

8. Verfahren nach einem der Ansprüche 2 bis 7, wobei das Verfahren Teil eines Verfahrens zum Herstellen von Brei zur Papierherstellung oder eines Verfahrens zur Herstellung von Papier ist.

9. Teilchenförmiges Mineral, das mit einer oder mehreren Kolophoniumsäure(n) und/oder einem oder mehreren Derivat(en) davon beschichtet ist, wobei jede Kolophoniumsäure eine oder mehrere Säuren vom Abietin-Typ und/oder eine oder mehrere Säuren vom Pimar-Typ umfasst, und wobei jedes Kolophoniumsäurederivat aus der Gruppe bestehend aus Kolophoniumester, Kolophoniumamin, Kolophoniumamid, Kolophoniumsäurechlorid, Kolophoniumanhydrid, Kolophoniumcarboxylat, Kolophoniumthioester und Kolophoniumacylphosphat ausgewählt ist.

10. Beschichtetes, teilchenförmiges Mineral nach Anspruch 9, wobei das teilchenförmige Mineral ein Erdalkalimetallkarbonat wie etwa Calciumkarbonat, beispielsweise gefälltes Calciumkarbonat (PCC) oder gemahlenes Calciumkarbonat (GCC) ist.

11. Beschichtetes, teilchenförmiges Mineral nach Anspruch 9 oder 10, wobei jede Säure vom Abietin-Typ aus Abietinsäure, Neoabietinsäure, Dehydroabietinsäure, Palustrinsäure und Levopimarsäure ausgewählt ist und jede Säure vom Pimar-Typ aus Pimarsäure und Isopimarsäure ausgewählt ist.

12. Beschichtetes, teilchenförmiges Mineral nach einem der Ansprüche 9 bis 11, wobei das teilchenförmige Mineral mit 0,1 Gew.-% bis 5 Gew.-% der Kolophoniumsäure(n) und/oder Derivat(en) davon, bezogen auf das Gewicht des teilchenförmigen Minerals, beschichtet ist, wobei beispielsweise das teilchenförmige Mineral mit 0,5 Gew.-% bis 2 Gew.-% der Kolophoniumsäure(n) und/oder des Derivats/der Derivate davon beschichtet ist.

13. Beschichtetes teilchenförmiges Mineral nach einem der Ansprüche 9 bis 12, wobei das teilchenförmige Mineral

einen $d_{50}$-Wert im Bereich von 0,5 μm bis 5 μm aufweist und/oder wobei das teilchenförmige Mineral eine BET-Oberfläche im Bereich von 1 bis 15 m$^2$/g aufweist.

14. Zusammensetzung, umfassend einen Zellulosebrei und ein beschichtetes teilchenförmiges Mineral nach einem der Ansprüche 9 bis 13, wobei beispielsweise die Menge des beschichteten, teilchenförmigen Minerals in der Zusammensetzung 0,25 Gew.-% bis 2,50 Gew.-%, basierend auf dem Gewicht des trockenen Zellulosebreis, beträgt.

15. Verfahren zum Herstellen eines beschichteten teilchenförmigen Minerals nach einem der Ansprüche 9 bis 13, wobei das Verfahren Beschichten eines teilchenförmigen Minerals mit einer oder mehreren Kolophoniumsäure(n) und/oder einem oder mehreren Derivat(en) davon umfasst.

**Revendications**

1. Utilisation d'un minéral particulaire revêtu d'un ou plusieurs acide(s) de colophane et/ou de leurs dérivé(s) en tant qu'agent de contrôle de poix et/ou de matières collantes dans une composition comprenant une pâte cellulosique, dans laquelle chaque acide de colophane comprend un ou plusieurs acides abiétiques et/ou un ou plusieurs acides pimariques, et dans laquelle chaque dérivé d'acide de colophane est choisi dans le groupe constitué par un ester de colophane, une amine de colophane, un amide de colophane, un chlorure d'acyle de colophane, un anhydride de colophane, un carboxylate de colophane, un thioester de colophane et un phosphate d'acyle de colophane.

2. Procédé de réduction de poix dissoute et/ou colloïdale et/ou de matières collantes dans une pâte cellulosique, le procédé comprenant la mise en contact de la pâte cellulosique avec un minéral particulaire ayant un revêtement d'un ou plusieurs acide(s) de colophane et/ou de leurs dérivé(s), dans lequel chaque acide de colophane comprend un ou plusieurs acides abiétiques et/ou un ou plusieurs acides pimariques, et dans lequel chaque dérivé d'acide de colophane est choisi dans le groupe constitué par un ester de colophane, une amine de colophane, un amide de colophane, un chlorure d'acyle de colophane, un anhydride de colophane, un carboxylate de colophane, un thioester de colophane et un phosphate d'acyle de colophane.

3. Utilisation ou procédé selon les revendications 1 ou 2, dans lequel le minéral particulaire est un carbonate de métal alcalino-terreux tel que le carbonate de calcium, par exemple le carbonate de calcium précipité (PCC) ou le carbonate de calcium broyé (GCC).

4. Utilisation ou procédé selon une quelconque revendication précédente, dans lequel chaque acide abiétique est choisi parmi l'acide abiétique, l'acide néoabiétique, l'acide déhydroabiétique, l'acide palustrique et l'acide lévopimarique et chaque acide pimarique est choisi parmi l'acide pimarique et l'acide isopimarique.

5. Utilisation ou procédé selon une quelconque revendication précédente, dans lequel le minéral particulaire est revêtu de 0,1 % en poids à 5 % en poids du ou des acides de colophane et/ou de leurs dérivés par rapport au poids du minéral particulaire, par exemple, dans lequel le minéral particulaire est revêtu de 0,5 % en poids à 2 % en poids du ou des acides de colophane et/ou de leurs dérivés.

6. Utilisation ou procédé selon une quelconque revendication précédente, dans lequel le minéral particulaire a un $d_{50}$ allant de 0,5 μm à 5 μm et/ou dans lequel le minéral particulaire a une surface spécifique BET allant de 1 à 15 m$^2$/g.

7. Utilisation ou procédé selon une quelconque revendication précédente, dans lequel le minéral particulaire revêtu est utilisé en une quantité de 0,25 % en poids à 2,50 % en poids par rapport au poids total de pâte cellulosique sèche.

8. Procédé selon l'une quelconque des revendications 2 à 7, dans lequel le procédé fait partie d'un procédé de fabrication de pâte à papier ou d'un procédé de fabrication de papier.

9. Minéral particulaire revêtu d'un ou plusieurs acide(s) de colophane et/ou de leurs dérivé(s), dans lequel chaque acide de colophane comprend un ou plusieurs acides abiétiques et/ou un ou plusieurs acides pimariques, et dans lequel chaque dérivé d'acide de colophane est choisi dans le groupe constitué par un ester de colophane, une amine de colophane, un amide de colophane, un chlorure d'acyle de colophane, un anhydride de colophane, un carboxylate de colophane, un thioester de colophane et un phosphate d'acyle de colophane.

10. Minéral particulaire revêtu selon la revendication 9, dans lequel le minéral particulaire est un carbonate de métal alcalino-terreux tel que le carbonate de calcium, par exemple le carbonate de calcium précipité (PCC) ou le carbonate de calcium broyé (GCC).

11. Minéral particulaire revêtu selon la revendication 9 ou 10, dans lequel chaque acide abiétique est choisi parmi l'acide abiétique, l'acide néoabiétique, l'acide déhydroabiétique, l'acide palustrique et l'acide lévopimarique et chaque acide pimarique est choisi parmi l'acide pimarique et l'acide isopimarique.

12. Minéral particulaire revêtu selon l'un quelconque des revendications 9 à 11, dans lequel le minéral particulaire est revêtu de 0,1 % en poids à 5 % en poids du ou des acides de colophane et/ou de leurs dérivés par rapport au poids du minéral particulaire, par exemple, dans lequel le minéral particulaire est revêtu de 0,5 % en poids à 2 % en poids du ou des acides de colophane et/ou de leurs dérivés.

13. Minéral particulaire revêtu selon l'une quelconque des revendications 9 à 12, dans lequel le minéral particulaire a un $d_{50}$ allant de 0,5 $\mu$m à 5 $\mu$m et/ou dans lequel le minéral particulaire a une surface spécifique BET allant de 1 à 15 m$^2$/g.

14. Composition comprenant une pâte cellulosique et un minéral particulaire revêtu selon l'une quelconque des revendications 9 à 13, par exemple dans laquelle la quantité de minéral particulaire revêtu dans la composition est de 0,25 % en poids à 2,50 % en poids par rapport au poids de la pâte cellulosique sèche.

15. Procédé de fabrication d'un minéral particulaire revêtu selon l'une quelconque des revendications 9 à 13, le procédé comprenant le revêtement d'un minéral particulaire d'un ou plusieurs acide(s) de colophane et/ou de leurs dérivé(s).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BR 102014002485 A2
- EP 2546410 A
- EP 614948 A

**Non-patent literature cited in the description**

- DATABASE WPI. 2015-380332
- Paper Coating Pigments. *TAPPI Monograph Series,* (30), 34-35